# EUROPEAN PATENT SPECIFICATION

(11) **EP 2 056 646 B1**
(45) Date of publication and mention of the grant of the patent: **07.01.2015**
(21) Application number: 07291321.3
(22) Date of filing: 02.11.2007
(51) Int. Cl.: H04W 88/02

(54) **Communications in uncoordinated wireless communication networks**
Kommunikationen in nicht koordinierten drahtlosen Kommunikationsnetzwerken
Communications dans des réseaux de communication sans dil non coordonnés

(43) Date of publication of application: 06.05.2009
(73) Proprietor: Motorola Mobility LLC, Libertyville, IL 60048 (US)
(72) Inventor: Lewis, Jonathan David, 06570 St Paul Alpes Martimes (FR)
(74) Representative: Openshaw, Paul Malcolm

(56) References cited:
- EP-A- 1 753 253
- WO-A-2006/123974
- WO-A-2007/047477
- WO-A-2007/092807

## Description

### FIELD OF THE DISCLOSURE

The present disclosure relates generally to wireless communications and more particularly to maintaining registration with uncoordinated wireless communication networks.

### BACKGROUND

In order for a wireless communication terminal (UE) to maintain registration with a network it is generally necessary for the UE to monitor the network. For example, the UE makes signal strength measurements to determine when different cells should be selected and typically the UE also periodically monitors a paging channel for incoming paging messages. It may also be necessary for the UE to communicate with the network, for example, to provide power measurement reports and location update information to the network. The communication of measurement reports and update information generally occur on a control channel.

In wireless communication systems that implement coordinated radio access technologies like GSM and UMTS, the standardized communication protocols have been defined so that a multi-mode mobile terminal needs to register (camp) on only one or the other of the radio access networks. In coordinated networks, it is unnecessary for a multi-mode UE to maintain concurrent registrations on separate networks implementing the different radio access technologies. For example, GSM and UMTS networks have a number of common interfaces and functions that allow handover between modes, common authentication and registration, and paging on a single access technology. Thus in a coordinated network, a multi-mode UE can seamlessly switch between different radio access technologies while maintaining a registration on a single network.

In a multi-mode UE that supports two or more uncoordinated radio access technologies, for example, WiMax and GSM, it is sometimes necessary to maintain separate registrations on both networks, for example, to receive incoming paging messages from both networks. If concurrent registration is required on uncoordinated networks, it will likely be necessary at times for the UE to transmit to the two separate networks simultaneously. However, simultaneous radio communication is usually complicated by radio frequency cross-coupling among other considerations. Additionally, simultaneous communication on different radio access technologies requires separate RF transceivers, which increase cost and power consumption.

WO 2007/092807 A discloses a method of operating an idle mobile unit that is capable of communicating with first and second wireless communication systems. One example of the method includes providing a location update message in response to the idle mobile unit transitioning from a first tracking area associated with the second wireless communication system to a second tracking area associated with the second wireless communication system. The first and second wireless communication systems are capable of paging the idle mobile unit following the location update message. EP-A-1 753 253 discloses an arrangement in a third-generation mobile-communication/wireless-LAN integration system in which a third-generation mobile communication system is integrated with a wireless LAN system, wherein an access network unit of the third-generation mobile communication system performs control, assuming that the wireless LAN system is a packet communication channel. WO 2006/123974 A discloses a method for ciphering and transmitting data, to be used by a communication device being arranged to transmit data through a first data port according to a first transmission protocol, and to form ciphered exploiting a ciphering algorithm being fed with a first set of ciphering parameters, comprising a ciphering parameter CP5. WO 2007/047477 A discloses a system and method for supporting a multi-mode portable user terminal (UT) hard handoff procedure for a call from a wireless local area network (WLAN) to a cellular telephone network.

The various aspects, features and advantages of the disclosure will become more fully apparent to those having ordinary skill in the art upon a careful consideration of the following Detailed Description thereof with the accompanying drawings described below. The drawings may have been simplified for clarity and are not necessarily drawn to scale.

### BRIEF DESCRIPTION OF THE DRAWINGS

FIG. 1 illustrates a multimode terminal communicating in a system of uncoordinated wireless communication networks.
FIG. 2 is a schematic block diagram of a wireless communication terminal.
FIG. 3 illustrates a multimode terminal communicating in an alternate system of uncoordinated wireless communication networks.

### DETAILED DESCRIPTION

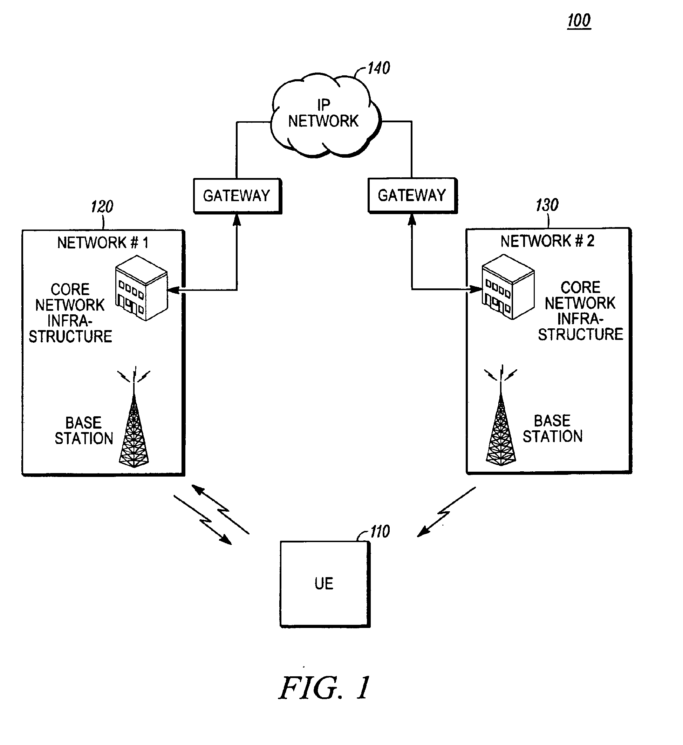

In the system 100 of FIG. 1, a multimode wireless communication terminal 110 communicates on first and second wireless communication networks 120 and 130. A multimode wireless communication terminal is a terminal capable of communicating on wireless communication networks implementing different communication protocols. According to one aspect of the disclosure a multimode terminal maintains concurrent registrations on the first and second wireless communication networks. In one implementation, the first and second networks are uncoordinated. In the instant disclosure, uncoordinated networks are networks that require a wireless communication terminal to maintain separate registrations with each network when concurrently connected thereto by at least separately monitoring each network. Communication networks implementing the GSM and WiMAX protocols are uncoordinated and thus separate networks implementing these protocols are not coordinated. The UMTS, CDMA2000 and WiMAX protocols are also uncoordinated. These network protocols are merely examples of protocols that may be implemented by uncoordinated networks. The disclosure is not intended to be limited to any particular combination of uncoordinated networks. Uncoordinated networks are distinguished from coordinated networks that require a multimode terminal to maintain a registration with only one network or the other when concurrently connected to both networks. Thus in GSM and UMTS networks, which are coordinated, it is only necessary for the multimode terminal to register, or camp, on one or the other of the radio access networks, but not both.

The maintenance of a network registration generally requires that the wireless communication terminal monitor the network, for example, by making signal strength measurements, monitoring a paging channel, etc. Network registration maintenance may also impose certain reporting requirements on the terminal. The terminal generally transmits such reports on a control channel of the network. Exemplary control channel information reported by the terminal includes but is not limited to power measurement reports and location update information. Information that the terminal reports to the network on a control channel is referred to herein as control channel information. Networks implementing different communication protocols generally have different monitoring and reporting requirements.

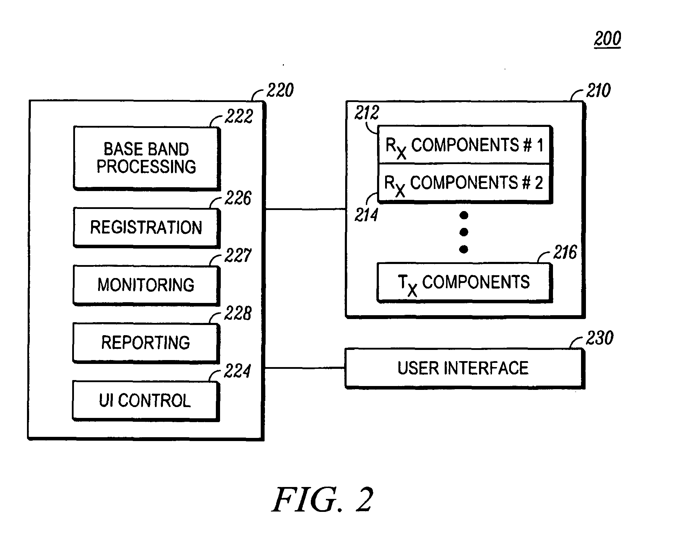

In FIG. 2, the wireless communication terminal 200 is a multimode device comprising a transceiver 210 capable of wireless communications on first and second uncoordinated networks, for example, a GSM network and a WiMAX network. In one embodiment, the terminal is capable of receiving on different networks. The multimode terminal 200 is generally capable of transmitting and receiving on both wireless communication networks, though not necessarily at the same time. In one implementation, the terminal may transmit and receive on the first and second networks only at different times. More generally, however, the terminal may be capable of receiving on both networks concurrently and in some embodiments the terminal may also be capable of concurrent transmission on both networks. In FIG. 1, the receiver is implemented with separate receive components 212, 214 ... for receiving on different access networks. The receive components may be implemented as dedicated receivers or as a software defined radio capable of configuration for receiving on different access networks. In FIG. 1, the transceiver also includes one or more transmitters 216 configurable for transmitting on the different access networks.

In FIG. 2, the terminal also comprises a transceiver communicably coupled to a controller 220. The controller may be implemented as a CPU and/or other processor, for example, a digital signal processor. The controller is typically associated with some memory as is known generally by those having ordinary skill in the art. The controller performs baseband processing functionality 222 for the transceiver 210. This functionality is typically implemented by software or firmware stored in or on a memory element of the terminal. In some implementations, the baseband processing functions may be performed by an entity that is separate from the controller.

The terminal also includes a user interface 230. A typical user interface on a wireless communication terminal comprises one or more of the following: keypad, display and audio inputs and outputs among other interface elements also known generally by those having ordinary skill in the art. The terminal of the instant disclosure is not intended to be limited by any particular type or combination of user interface elements. The controller 220 also includes user interface (UI) control functionality 224, which is typically implemented by software or firmware residing on a memory element.

The control over other operational and functional features of the terminal is also controlled by software or firmware stored in or on a memory element. Alternatively, control over these operations and functions may be implemented by equivalent hardware or a combination of hardware and software. In FIG. 2, the controller generally includes a network registration element 226 that controls the network registration functionality of the terminal. In some instances, the registration element configures the terminal to concurrently register on multiple networks when multiple networks are available. In FIG. 1, for example, the terminal 110 is concurrently registered with networks 120 and 130. The controller also includes a network monitoring element 227 that configures the transceiver to monitor first and second wireless communication networks on which the wireless communication terminal is concurrently registered. In FIG. 1, the terminal 110 is configured to monitor networks 120 and 130 when the terminal is concurrently registered on the networks. For example, the controller may configure the transceiver to monitor a paging channel of each of the first and second wireless communication networks to which the wireless communication terminal is concurrently registered. The terminal may also monitor other channels or signals associated with the different networks, as discussed above.

In FIG. 1, the controller includes a network reporting element 228 that generally configures the transceiver to report information to one or more networks. In some embodiments, the terminal transmitted the report on a control channel of the wireless communication network. The information transmitted on the control channel is referred to as control channel information, examples of which are discussed above. In FIG. 1, the terminal 110 is configured to report control channel information to the first and second networks 120 and 130 when the terminal is concurrently registered on the networks. An example of control channel information reported to the networks is discussed above.

When the wireless communication terminal is concurrently registered on more than one network, it may be desirable in some embodiments for the terminal to directly report control channel information to only one of the networks, for example to maintain its registration on multiple networks. In one embodiment, the wireless communication network to which the control channel information is directly reported forwards control channel information to the other wireless communication network or networks to which the terminal is also registered as discussed more fully below. The information intended for the second wireless communication network to which the terminal is registered is information that would otherwise be transmitted on a control channel of the second wireless communication network.

The wireless communication terminal may determine to which network the control channel information is directly reported based on various considerations. In one embodiment, the controller determines the network to which the control channel information will be directly sent based on power consumption considerations. For example, the wireless communication terminal may be configured to send the control channel information to the network that imposes the least uplink power consumption burden on the terminal. In another embodiment, the terminal selects the wireless communication network to which the control channel information is directly sent based on the frequency or periodicity with which the terminal communicates with the network. For example, in the case that one of the networks requires more frequent control transmissions than the other, the network requiring more frequent reports may be selected for all control channel transmissions so that the protocol requirements of that network are not violated. In other embodiments, the terminal selects the wireless communication network to which the control channel information is directly sent based on the quality or expected quality of the channel. The channel or link quality may be based upon frequency or interference considerations. In other embodiments, other considerations may form the basis for determining to which network reports are sent directly. These considerations include but are not limited to the quality of service requirements of the terminal, network load balancing, and the network on which the terminal has been assigned a dedicated channel, among other considerations.

In one particular embodiment, the controller configures the transceiver to transmit control channel information on a control channel of only the first wireless communication network when the terminal is concurrently registered on first and second networks. According to this embodiment, the terminal does not transmit control channel information directly to the second wireless communication network despite being registered with or on the second network. However, the control channel information transmitted on the control channel of the first wireless communication network includes information intended for the first wireless communication network and information intended for the second wireless communication network. The control channel information intended for the second wireless communication network is received by the first wireless communication network. Generally, the first wireless communication network forwards the control channel information to the second wireless communication network as discussed more fully below. The forwarding of information intended for the second network via the first network, as discussed above, may be considered as a tunneling of information from the first network to the second network. The tunneling of information from one network to another would reduce power consumption in the terminal associated with transmitting the information directly to the second network.

In one embodiment, the controller configures the transceiver to transmit area update information on the control channel information of the first wireless communication network. In this instance, the area update information includes area update information intended for the first wireless communication network and area update information intended for the second wireless communication network. In one embodiment, the area update information is selected from a group comprising: location area update information; and routing area update information. Generally the terminal may report other information intended for the first and second networks, for example, measurement reports. However, the disclosure is not intended to be limited to the reporting of any particular information to any of the networks to which the terminal is registered. The information reported to the multiple networks to which a terminal is registered is generally different, since networks compliant with different communication protocols may have different reporting requirements.

In FIG. 1, the first and second networks 120 and 130 are interconnected by another network, for example, an IP network like the Internet. The first and second networks are typically connected to other networks by a gateway, as illustrated in FIG. 1. According to this embodiment, when the terminal 110 reports information to the first network 120, for example, area update information transmitted on a control channel, the first network sends the control channel information intended for the second network to the second network via the IP network 140. In some embodiments, the controller is configured to encrypt the information intended for the second wireless communication network before transmitting the information to the first wireless communication network. In this case, the first network forwards information to the second network without knowledge of the contents. The approach does not require any additional network inter-working entities. It would also be possible to develop a proprietary set of messages understood by the terminal and the second network allowing an implementation without the need for a modification to communication protocols or standards.

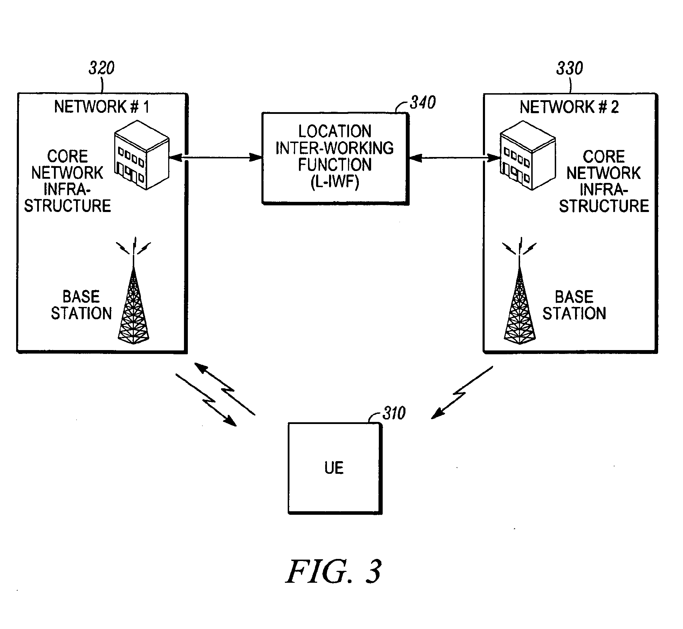

In FIG. 3, the system includes an Inter-Working Function (IWF) entity 340 interconnecting the first and second networks 320 and 330. The IWF entity passes information received by one network to the other. According to this embodiment, when the terminal 310 reports information to the first network 320, for example, area update information transmitted on a control channel, the first network sends control channel information intended for the second network to the second network via the IWF entity 340. In one implementation, the information intended for the second network is embedded in a message understood by both networks. Alternatively, the information intended for the second network could be embedded in an encrypted message that is understood only by the network for which its receipt is intended. According to this alternative embodiment, the first network may not know what information is being forwarded to the second network. The implementation of the IWF entity interconnecting the first and second networks does not coordinate the networks as the term is used herein since it remains necessary for the terminal to monitor each of the different networks to which it is registered, whereas in coordinated networks the terminal need only monitor one network.

In one embodiment, the terminal directly reports uplink information to only the first wireless communication network when the terminal is registered to both the first and second wireless communication networks. During this scenario, it is possible that the terminal is allocated a dedicated channel on the second wireless communication network. In some instances, it may be desirable for the controller to configure the transceiver to transmit information to only the second wireless communication network, instead of the first wireless communication network, upon establishing the dedicated communication with the second wireless communication network. In this case, the control channel information transmitted on the control channel of the second wireless communication network includes information intended for the second wireless communication network and information intended for the first wireless communication network. According to this embodiment, the second wireless communication network forwards the information intended for the first wireless communication network to the first network.

In the event that the terminal loses its connection, and hence its registration is terminated, with the first wireless communication network when reporting control channel information to only the first network, the controller configures the transceiver to transmit the control channel information on a control channel of the second wireless communication network, instead of the control channel of the first wireless communication network.

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope of the inventions, which are to be limited not by the exemplary embodiments but by the appended claims.

## Claims

1. A wireless communication terminal, comprising a transceiver (210), a controller (220) coupled to the transceiver (210), the controller (220) configuring the transceiver (210) to monitor first and second wireless communication networks (120, 130) on which the wireless communication terminal is concurrently registered, the first and second wireless communication networks (120, 130) are uncoordinated networks being networks that require the wireless communication terminal to maintain separate registrations with each of the first and second wireless communication networks, **characterized by**:
the controller (220) configuring the transceiver (210) to transmit control channel information on a control channel of only the first wireless communication network while concurrently registered to both the first and second wireless communication networks, and
the control channel information transmitted on the control channel of the first wireless communication network including first information intended for the first wireless communication network and second information intended for the second wireless communication network, wherein the second information is different from the first information.

2. The apparatus of Claim 1,
the controller (220) configuring the transceiver (210) to establish a dedicated communication with the second wireless communication network,
the controller (220) configuring the transceiver (210) to transmit control channel information on a control channel of only the second wireless communication network, instead of the control channel of the first wireless communication network, upon establishing the dedicated communication with the second wireless communication network,
the control channel information transmitted on the control channel of the second wireless communication network including second information intended for the second wireless communication network and first information intended for the first wireless communication network.

3. The apparatus of Claim 1, the controller (220) configuring the transceiver (210) to transmit the control channel information on a control channel of only the second wireless communication network, instead of the control channel of the first wireless communication network, after the registration with the first wireless communication network is terminated.

4. The apparatus of Claim 1, the controller (220) configured to determine to send the control channel information on the control channel of only the first wireless communication network based upon consideration of power consumption at the terminal.

5. The apparatus of Claim 1, the controller (220) configured to determine to send the control channel information on the control channel of only the first wireless communication network based upon link quality.

6. The apparatus of Claim 1, the controller (220) configured to determine to send the control channel information on the control channel of only the first wireless communication network based upon a periodicity of required control channel transmissions to each of the first and second wireless communication networks.

7. The apparatus of Claim 1, the controller (220) configured to encrypt the information intended for the second wireless communication network before transmitting the information to the first wireless communication network.

8. The apparatus of Claim 1, the controller (220) configuring the transceiver (210) to monitor a paging channel of each of the first and second wireless communication networks when the wireless communication terminal is concurrently registered on the first and second wireless communication networks.

9. A method in a wireless communication terminal, the method comprising:monitoring a first wireless communication network on which the wireless communication terminal is registered, monitoring a second wireless communication network on which the wireless communication terminal is registered at the same time the wireless communication terminal is registered to the first wireless communication network, the first and second wireless communication networks (120, 130) are uncoordinated networks being networks that require the wireless communication terminal to maintain separate registrations with each of the first and second wireless communication networks, **characterized by**:
transmitting information only to the first wireless communication network while concurrently registered to both the first and second wireless communication networks,
the information transmitted to the first wireless communication network including first information intended for the first wireless communication network and second information intended for the second wireless communication network, wherein the second information is different from the first information.

10. The method of Claim 9,
transmitting the information to the first wireless communication network includes transmitting area update information,
the area update information transmitted to the first wireless communication network including area update information intended for the first wireless communication network and area update information intended for the second wireless communication network.

11. The method of Claim 9,
transmitting the information to the first wireless communication system includes transmitting area update information,
the area update information transmitted to the first wireless communication network including area update information intended for the first wireless communication network and area update information intended for the second wireless communication network,
the area update information selected from a group comprising location area update information and routing area update information.

12. The method of Claim 9,
establishing a dedicated communication with the second wireless communication network,
transmitting information to only the second wireless communication network, instead of the first wireless communication network, upon establishing the dedicated communication with the second wireless communication network,
the information transmitted to the second wireless communication network including information intended for the second wireless communication network and information intended for the first wireless communication network.

13. The method of Claim 9,
terminating the registration with the first wireless communication network,
transmitting the information to only the second wireless communication network, instead of the first wireless communication network, after the registration with the first wireless communication network is terminated.

14. The method of Claim 9, determining to send the information to the first wireless communication network based upon consideration of power consumption at the wireless communication terminal.

15. The method of Claim 9, determining to send the information to the first wireless communication network based upon link quality.

16. The method of Claim 9, determining to send the information to the first wireless communication network based upon a periodicity of required control channel transmissions to each of the first and second wireless communication networks.

17. The method of Claim 9, encrypting the information intended for the second wireless communication network before transmitting the information to the first wireless communication network.

18. The method of Claim 9, monitoring the first and second wireless communication networks includes monitoring a paging channel of each of the first and second wireless communication networks (120, 130).

## Patentansprüche

1. Drahtloses Kommunikationsendgerät, umfassend einen Transceiver (210), einen Regler (220), der mit dem Transceiver (210) verbunden ist, wobei der Regler (220) den Transceiver (210) konfiguriert für eine Überwachung eines ersten und eines zweiten drahtlosen Kommunikationsnetzwerks (120,130), in dem das drahtlose Kommunikationsendgerät gleichzeitig registriert ist, wobei das erste und das zweite drahtlose Kommunikationsnetzwerk (120, 130) unkoordinierte Netzwerke sind, welche Netzwerke sind, die erfordern, dass das drahtlose Kommunikationsendgerät in dem ersten und in dem zweiten drahtlosen Kommunikationsnetzwerk jeweils separat registriert bleibt, **dadurch gekennzeichnet:**
**dass** der Regler (220) den Transceiver (210) konfiguriert für die Übertragung von Steuerungskanalinformationen auf einem Steuerungskanal nur des ersten drahtlosen Kommunikationsnetzwerks bei gleichzeitiger Registrierung sowohl in dem ersten als auch in dem zweiten Kommunikationsnetzwerk und
**dass** die Steuerungskanalinformationen, die auf dem Steuerungskanal des ersten drahtlosen Kommunikationsnetzwerks übertragen werden, erste Informationen enthalten, die für das erste drahtlose
Kommunikationsnetzwerk bestimmt sind, und zweite Informationen, die für das zweite drahtlose Kommunikationsnetzwerk bestimmt sind, wobei sich die zweiten Informationen von den ersten Informationen unterscheiden.

2. Vorrichtung nach Anspruch 1,
wobei der Regler (220) den Transceiver (210) derart konfiguriert, dass dieser eine eigene Kommunikation mit dem zweiten drahtlosen Kommunikationsnetzwerk aufbaut,
wobei der Regler (220) den Transceiver (210) derart konfiguriert, dass dieser nach dem Aufbau der eigenen Kommunikation mit dem zweiten drahtlosen Kommunikationsnetzwerks anstelle einer Übertragung auf dem Steuerungskanal des ersten drahtlosen Kommunikationsnetzwerks Steuerungskanalinformationen auf einem Steuerungskanal nur des zweiten drahtlosen Kommunikationsnetzwerks überträgt,
wobei die Steuerungskanalinformationen, die auf dem Steuerungskanal des zweiten drahtlosen Kommunikationsnetzwerks übertragen werden, zweite Informationen enthalten, die für das zweite drahtlose Kommunikationsnetzwerk bestimmt sind, und erste Informationen, die für das erste drahtlose Kommunikationsnetzwerk bestimmt sind.

3. Vorrichtung nach Anspruch 1, wobei der Regler (220) den Transceiver (210) derart konfiguriert, dass dieser nach Abschluss der Registrierung in dem ersten drahtlosen Kommunikationsnetzwerk anstelle einer Übertragung auf dem Steuerungskanal des ersten drahtlosen Kommunikationsnetzwerks die Steuerungskanalinformationen auf einem Steuerungskanal nur des zweiten drahtlosen Kommunikationsnetzwerks überträgt.

4. Vorrichtung nach Anspruch 1, wobei der Regler (220) derart konfiguriert ist, dass dieser nach Abwägung des Energieverbrauchs an dem Endgerät bestimmt, dass die Steuerungskanalinformationen auf dem Steuerungskanal nur des ersten drahtlosen Kommunikationsnetzwerks gesendet werden.

5. Vorrichtung nach Anspruch 1, wobei der Regler (220) derart konfiguriert ist, dass dieser auf der Basis der Verbindungsqualität bestimmt, dass die Steuerungskanalinformationen auf dem Steuerungskanal nur des ersten drahtlosen Kommunikationsnetzwerks gesendet werden.

6. Vorrichtung nach Anspruch 1, wobei der Regler (220) derart konfiguriert ist, dass dieser auf der Basis einer Periodizität der notwendigen Übertragungen der Steuerungskanäle jeweils zu dem ersten und zu dem zweiten drahtlosen Kommunikationsnetzwerks bestimmt, dass die Steuerungskanalinformationen auf dem Steuerungskanal nur des ersten drahtlosen Kommunikationsnetzwerks gesendet werden.

7. Vorrichtung nach Anspruch 1, wobei der Regler (220) konfiguriert ist für die Verschlüsselung der Informationen, die für das zweite drahtlose Kommunikationsnetzwerk bestimmt sind, vor Übertragung der Informationen zu dem ersten drahtlosen Kommunikationsnetzwerk.

8. Vorrichtung nach Anspruch 1, wobei der Regler (220) den Transceiver (210) konfiguriert für die Überwachung eines Pagingkanals jeweils des ersten und des zweiten drahtlosen Kommunikationsnetzwerks, wenn das drahtlose Kommunikationsendgerät gleichzeitig in dem ersten und in dem zweiten drahtlosen Kommunikationsnetzwerk registriert ist.

9. Verfahren bei einem drahtlosen Kommunikationsendgerät, wobei das Verfahren die Überwachung eines ersten drahtlosen Kommunikationsnetzwerks, in welchem das drahtlose Kommunikationsendgerät registriert ist, und die Überwachung eines zweiten drahtlosen Kommunikationsnetzwerks, in dem das drahtlose Kommunikationsendgerät gleichzeitig mit seiner Registrierung in dem ersten drahtlosen Kommunikationsnetzwerk registriert ist,
wobei das erste und das zweite drahtlose Kommunikationsnetzwerk (120, 130) unkoordinierte Netzwerke sind, welches Netzwerk sind, die erfordern, dass das drahtlose Kommunikationsendgerät in dem ersten und in dem zweiten drahtlosen Kommunikationsnetzwerk jeweils separat registriert bleibt, **dadurch gekennzeichnet:**
**dass** während der gleichzeitigen Registrierung sowohl in dem ersten als auch in dem zweiten drahtlosen Kommunikationsnetzwerk Informationen nur zu dem ersten drahtlosen Kommunikationsnetzwerk übertragen werden und
**dass** die zu dem ersten drahtlosen Kommunikationsnetzwerk übertragenen Informationen erste Informationen enthalten, die für das erste drahtlose Kommunikationsnetzwerk bestimmt sind, und zweite Informationen, die für das zweite drahtlose Kommunikationsnetzwerk bestimmt sind, wobei sich die zweiten Informationen von den ersten Informationen unterscheiden.

10. Verfahren nach Anspruch 9, wobei
die Übertragung der Informationen zu dem ersten drahtlosen Kommunikationsnetzwerk das Übertragen von Bereichsaktualisierungsinformationen einschließt und wobei die Bereichsaktualisierungsinformationen, die zu dem ersten drahtlosen Kommunikationsnetzwerk übertragen werden, Bereichsaktualisierungsinformationen enthalten, die für das erste drahtlose Kommunikationsnetzwerk bestimmt sind, und Bereichsaktualisierungsinformationen, die für das zweite drahtlose Kommunikationsnetzwerk bestimmt sind.

11. Verfahren nach Anspruch 9,
wobei die Übertragung der Informationen zu dem ersten drahtlosen Kommunikationssystem die Übertragung von Bereichsaktualisierungsinformationen einschließt,
wobei die Area-Aktualisierungsinformationen, die zu dem ersten drahtlosen Kommunikationsnetzwerk übertragen werden, Bereichsaktualisierungsinformationen enthalten, die für das erste drahtlose Kommunikationsnetzwerk bestimmt sind, und Bereichsaktualisierungsinformationen, die für das zweite drahtlose Kommunikationsnetzwerk bestimmt sind, und
wobei die Bereichsaktualisierungsinformationen aus einer Gruppe ausgewählt werden, die Location Bereichsaktualisierungsinformationen und Routing Bereichsaktualisierungsinformationen umfasst.

12. Verfahren nach Anspruch 9,
wobei eine eigene Kommunikation mit dem zweiten drahtlosen Kommunikationsnetzwerk aufgebaut wird,
wobei nach dem Aufbau der eigenen Kommunikation mit dem zweiten Kommunikationsnetzwerk anstelle einer Übertragung zu dem ersten drahtlosen Kommunikationsnetzwerk Informationen nur zu dem zweiten drahtlosen Kommunikationsnetzwerk übertragen werden und wobei die Informationen, die zu dem zweiten drahtlosen Netzwerk übertragen werden, Informationen enthalten, die für das zweite drahtlose Kommunikationsnetzwerk bestimmt sind, und Informationen, die für das erste drahtlose Kommunikationsnetzwerk bestimmt sind.

13. Verfahren nach Anspruch 9,
wobei die Registrierung in dem ersten drahtlosen Kommunikationsnetzwerk abgeschlossen wird und
wobei nach Abschluss der Registrierung in dem ersten drahtlosen Kommunikationsnetzwerk anstelle einer Übertragung zu dem ersten drahtlosen Kommunikationsnetzwerk Informationen nur zu dem zweiten drahtlosen Kommunikationsnetzwerk übertragen werden.

14. Verfahren nach Anspruch 9,
wobei nach Abwägung des Energieverbrauchs an dem ersten drahtlosen Kommunikationsendgerät bestimmt wird, dass die Informationen zu dem ersten drahtlosen Kommunikationsnetzwerk gesendet werden.

15. Verfahren nach Anspruch 9,
wobei auf der Basis der Verbindungsqualität bestimmt wird, dass die Informationen zu dem ersten drahtlosen Kommunikationsnetzwerk gesendet werden.

16. Verfahren nach Anspruch 9,
wobei auf der Basis einer Periodizität der notwendigen Übertragungen der Steuerungskanäle jeweils zu dem ersten und zu dem zweiten drahtlosen Kommunikationsnetzwerks bestimmt wird, dass die Informationen zu dem ersten drahtlosen Kommunikationsnetzwerk gesendet werden.

17. Verfahren nach Anspruch 9,
wobei die Informationen, die für das zweite drahtlose Kommunikationsnetzwerk bestimmt sind, vor Übertragung der Informationen zu dem ersten drahtlosen Kommunikationsnetzwerk verschlüsselt werden.

18. Verfahren nach Anspruch 9,
wobei die Überwachung des ersten und des zweiten drahtlosen Kommunikationsnetzwerks die Überwachung eines Pagingkanals jeweils des ersten und des zweiten drahtlosen Kommunikationsnetzwerks beinhaltet.

## Revendications

1. Terminal de communication sans fil, comprenant un émetteur-récepteur (210), un contrôleur (220) accouplé à l'émetteur-récepteur (210), le contrôleur (220) configurant l'émetteur-récepteur (210) de surveiller des premier et deuxième réseaux sans fil (120, 130) sur lesquels le terminal de communication sans fil est enregistré concurremment, les premier et deuxième réseaux sans fil sont des réseaux non-coordonnés, étant des réseaux qui nécessitent que le terminal de communication sans fil maintient des enregistrements séparés avec chacun des premier et deuxième réseaux de communication sans fil, **caractérisé en ce que** :
le contrôleur (220) configure l'émetteur-récepteur (210) pour transmettre de l'information de canal de contrôle sur un canal de contrôle seulement du premier réseau de communication sans fil en étant enregistré concurremment sur les premier et deuxième réseaux sans fil, et
l'information de canal de contrôle transmise sur le canal de contrôle du premier réseau de communication sans fil inclut de la première information destinée au premier réseau de communication sans fil et de la deuxième information destinée au deuxième réseau de communication sans fil, dans lequel la deuxième information et différente de la première information.

2. Dispositif selon la revendication 1,
le contrôleur (220) configurant l'émetteur-récepteur (210) pour établir une communication dédiée avec le deuxième réseau de communication sans fil,
le contrôleur (220) configurant l'émetteur-récepteur (210) pour transmettre de l'information de canal de contrôle sur un canal de contrôle seulement du deuxième réseau de communication sans fil, au lieu du canal de contrôle du premier réseau de communication sans fil, lors de l'établissement de la communication dédiée avec le deuxième réseau de communication sans fil,
l'information de canal de contrôle transmise sur le canal de contrôle du deuxième réseau de communication sans fil comprenant de la deuxième information destinée au deuxième réseau de communication sans fil et de la première information destinée au premier réseau de communication sans fil.

3. Dispositif de la revendication 1, le contrôleur (220) configurant l'émetteur-récepteur (210) pour transmettre l'information de canal de contrôle sur un canal de contrôle seulement du deuxième réseau de communication sans fil, au lieu du canal de contrôle du premier réseau de communication sans fil, après que l'enregistrement sur le premier réseau de communication sans fil est terminé.

4. Dispositif selon la revendication 1, le contrôleur (220) étant configuré pour décider d'envoyer l'information de canal de contrôle sur le canal de contrôle seulement du premier réseau de communication sans fil en considérant la consommation d'énergie au terminal.

5. Dispositif selon la revendication 1, le contrôleur (220) étant configuré pour décider d'envoyer l'information de canal de contrôle sur le canal de contrôle seulement du premier réseau de communication sans fil en considérant la qualité du lien au réseau.

6. Dispositif selon la revendication 1, le contrôleur (220) étant configuré pour décider d'envoyer l'information de canal de contrôle sur le canal de contrôle seulement du premier réseau de communication sans fil en considérant une périodicité de transmissions obligatoires aux canaux de contrôle de chacun des premier et deuxième réseaux de communication sans fil.

7. Dispositif selon la revendication 1, le contrôleur (220) étant configuré pour chiffrer l'information destinée au deuxième réseau de communication sans fil avant de transmettre l'information au premier réseau de communication sans fil.

8. Dispositif selon la revendication 1, le contrôleur (220) configurant l'émetteur-récepteur (210) pour surveiller un canal d'avertissement de chacun des premier et deuxième réseaux de communication sans fil pendant que le terminal de communication sans fil est enregistré concurremment sur les premier et deuxième réseaux de communication sans fil.

9. Procédé dans un terminal de communication sans fil, le procédé comprenant surveiller un premier réseau de communication sans fil sur lequel le terminal de communication sans fil est enregistré, surveiller un deuxième réseau de communication sans fil sur lequel le terminal de communication sans fil est enregistré en même temps que le terminal de communication sans fil est enregistré sur le premier réseau de communication sans fil, les premier et deuxième réseaux de communication sans fil (120, 130) sont des réseaux non-coordonnés étant des réseaux qui nécessitent que le terminal de communication sans fil maintient des enregistrements séparés avec chacun des premier et deuxième réseaux de communication sans fil, **caractérisé par** :
transmettre de l'information seulement au premier réseau de communication sans fil tandis qu'étant enregistré concurremment à tous des premier et deuxième réseaux de communication sans fil,
l'information transmise au premier réseau de communication sans fil comprenant de la première information destinée au premier réseau de communication sans fil et de la deuxième information destinée au deuxième réseau de communication sans fil, dans lequel la deuxième information est différente de la première information.

10. Procédé selon la revendication 9,
transmettre de l'information au premier réseau de communication sans fil comprend transmettre de l'information de mise à jour de zone,
l'information de mise à jour de zone transmis au premier réseau de communication sans fil comprenant de l'information de mise à jour de zone destinée au premier réseau de communication sans fil et de l'information de mise à jour de zone destinée au deuxième réseau de communication sans fil.

11. Procédé selon la revendication 9,
transmettre de l'information au premier réseau de communication sans fil comprend transmettre de l'information de mise à jour de zone,
l'information de mise à jour de zone transmise au premier réseau de communication sans fil comprenant de l'information de mise à jour de zone destinée au premier réseau de communication sans fil et de l'information de mise à jour de zone destinée au deuxième réseau de communication sans fil, l'information de mise à jour de zone sélectionnée d'un groupe comprenant de l'information de mise à jour de zone d'endroit et de l'information de mise à jour de zone de routage.

12. Procédé selon la revendication 9,
établir une communication dédiée avec le deuxième réseau de communication sans fil,
transmettre de l'information seulement au deuxième réseau de communication sans fil, au lieu du premier réseau de communication sans fil, lors de l'établissement de la communication dédiée avec le deuxième réseau de communication sans fil,
l'information transmise au deuxième réseau de communication sans fil comprenant de l'information destinée au deuxième réseau de communication sans fil et de l'information destinée au premier réseau de communication sans fil.

13. Procédé selon la revendication 9,
terminer l'enregistrement sur le premier réseau de communication sans fil,
transmettre l'information seulement au deuxième réseau de communication sans fil, au lieu du premier réseau de communication sans fil, après que l'enregistrement sur le premier réseau de communication sans fil est terminé.

14. Procédé selon la revendication 9, décidant d'envoyer l'information au premier réseau de communication sans fil en considérant la consommation d'énergie au terminal de communication sans fil.

15. Procédé selon la revendication 9, décidant d'envoyer l'information au premier réseau de communication sans fil en considérant la qualité du lien au réseau.

16. Procédé selon la revendication 9, décidant d'envoyer l'information au premier réseau de communication sans fil en considérant une périodicité de transmissions obligatoires aux canaux de contrôle de chacun des premier et deuxième réseaux de communication sans fil.

17. Procédé selon la revendication 9, chiffrer l'information destinée au deuxième réseau de communication sans fil avant d'envoyer l'information au premier réseau de communication sans fil.

18. Procédé selon la revendication 9, surveiller les premier et deuxième réseaux de communication sans fil comprend surveiller un canal d'avertissement de chacun des premier et deuxième réseaux de communication sans fil.
